Europäisches Patentamt

European Patent Office

Office européen des brevets

(19)

(11) Veröffentlichungsnummer: **0 102 000**
**B1**

# (12) EUROPÄISCHE PATENTSCHRIFT

(45) Veröffentlichungstag der Patentschrift:
09.04.86

(51) Int. Cl.⁴: **A 61 C 17/04**

(21) Anmeldenummer: **83107876.1**

(22) Anmeldetag: **09.08.83**

(54) **Zahnärztliche Absaugeinrichtung.**

(30) Priorität: **23.08.82 DE 3231272**

(43) Veröffentlichungstag der Anmeldung:
**07.03.84 Patentblatt 84/10**

(45) Bekanntmachung des Hinweises auf die Patenterteilung:
**09.04.86 Patentblatt 86/15**

(84) Benannte Vertragsstaaten:
**DE FR GB IT SE**

(56) Entgegenhaltungen:
**EP - A - 0 023 036**
**EP - A - 0 040 181**
**AU - B - 22 472**
**DE - A - 2 138 831**
**DE - A - 3 112 219**
**DE - B - 1 930 085**
**DE - B - 2 342 543**
**DE - B - 2 459 881**
**GB - A - 1 106 858**
**US - A - 3 746 033**

(73) Patentinhaber: **Siemens Aktiengesellschaft, Berlin und München Wittelsbacherplatz 2, D-8000 München 2 (DE)**

(72) Erfinder: **Behringer, Wolfgang, Am Flechtenberg 26, D-6140 Bensheim (DE)**
Erfinder: **Kratochwilla, Hans-Michael, Ziegelhüttenstrasse 6, D-6143 Lorsch (DE)**

## Beschreibung

Die Erfindung bezieht sich auf eine zahnärztliche Absaugeinrichtung mit einer Saugpumpe, an der eine Saugleitung mit einer Saugdüse zum Absaugen von flüssigen und festen Teilchen angeschlossen ist unter Zwischenschaltung eines als Zyklon-Abscheider ausgebildeten Separierbehälters, in welchem die abgesaugten Teilchen von der Saugluft getrennt werden und welche einen in eine Abflußleitung mündenden Abflußkanal aufweist.

Eine solche Absaugeinrichtung ist beispielsweise aus EP-A-0 023 036 bekannt.

Wie aus Rückständen in den Abflußleitungen des Abwassernetzes erkennbar, gelangen in der zahnärztlichen Praxis beachtliche Mengen von hochwertigen Materialien, wie Gold, oder auch von umweltschädigenden Materialien, wie Silber-Amalgam, über die Abwasserleitung in das Abwassernetz.

Um zu verhindern, daß diese wertvollen oder umweltfeindlichen festen Teilchen in das Abwassernetz gelangen, wurden bisher unterschiedliche Maßnahmen angewandt.

Bei einer aus der DE-B-2 459 881 bekannten Absaugeinrichtung ist in dem Leitungskanal zwischen Saughandstück und Separierbehälter ein Sieb vorgesehen. Das Reinigen bzw. Entleeren des Siebes ist relativ umständlich und auch unhygienisch, insbesondere, wenn man berücksichtigt, daß bei Entnahme des Siebes durch eine zwangsläufig im Sieb vorhandene Restflüssigkeit ein unerwünschtes Vertropfen der Flüssigkeit gegeben ist.

Bei anderen bekannten Absaugeinrichtungen (DE-B-1 930 085, AU-B-22 472) werden die festen Partikel in einem in dem Einlaufstutzen, der vom Saugschlauch in den Separierbehälter mündet, befestigten Auffangsack gesammelt. Das Entleeren eines solchen Auffangsackes ist noch umständlicher als das Entleeren des zuvor geschilderten, von außen zugänglichen Siebes.

Bei den Absaugeinrichtungen gemäß DE-B-2 459 881 und AU-B-22 472 ist zusätzlich zu dem erwähnten Sieb bzw. Auffangsack in der Abflußleitung nach dem Separierbehälter ein abnehmbarer becherförmiger Behälter angeordnet, in den einerseits der Abflußkanal vom Separierbehälter und ein von einer Mundspülglasfüllvorrichtung abgehender weiterer Abflußkanal einmünden und andererseits oberhalb des Behälterrandes der weiterführende Anschluß der Abflußleitung angeordnet ist.

Wenngleich solche gleichermaßen als Syphon wirkende Behältnisse unter Umständen, d.h.,wenn die Strömung der durchfließenden Flüssigkeit nicht zu groß ist,dazu geeignet sind, daß sich relativ große und schwere feste Teilchen am Behälterboden ansammeln können, so sind diese Behältnisse nicht dazu geeignet, relativ leichte und kleine feste Teilchen zurückzuhalten,da diese durch die Strömung mitgerissen und in das Abwassernetz geleitet werden.

Der im Anspruch 1 angegebenen Erfindung liegt die Aufgabe zugrunde, eine Absaugeinrichtung der eingangs genannten Art dahingehend zu verbessern, daß man mit relativ einfachen Mitteln und mit hohem Abscheidegrad selbst kleine und leichte Partikel aus der in das Abwassernetz fließenden Flüssigkeit abfangen kann und daß das Entfernen des Abscheideguts aus der Absaugeinrichtung für den Benutzer auf relativ einfache und hygienische Art und Weise möglich ist.

Die gestellte Aufgabe wird bei einer Absaugeinrichtung der eingangs genannten Art dadurch gelöst, daß im Anschluß an den Separierbehälter unmittelbar unterhalb desselben ein Abscheidebehälter für die festen Teilchen abnehmbar und auswechselbar gehaltert ist, in welchem ein die einströmende Flüssigkeit beruhigendes und feste Teilchen zurückhaltendes Einsatzfilterteil angeordnet ist, durch den hindurch bis in Bodennähe des Behälters reichend ein zentrisch angeordneter und einerseits mit dem Abflußkanal des Separierbehälters und andererseits mit einer Spülun/oder Speieinrichtung in Verbindung stehender Leitungsabschnitt der Afbflußlei-tung eintaucht, und daß der eiterführende Anschluß der abflußleitung oberhalb des Behälterrandes angeordnet ist.

Dadurch, daß der Abflußkanal praktisch bis in Bodennähe des Abscheidebehälters eintaucht, werden bereits Turbulenzen beim Einströmen der Flüssigkeit verhindert. Durch den Filtereinsatz wird einerseits eine weitere Beruhigung des Wassers erzielt, wodurch sich ein Groß-teil der in der Flüssigkeit enthaltenen Partikel am Boden des Abscheidebehälters absetzen kann. Andererseits werden durch den Filtereinsatz leichtere und kleinere Teilchen beim Durchströmen der Flüssigkeit vom Filtermaterial absorbiert, wodurch ein relativ hoher Abscheidegrad erreicht wird, so daß das in den Abfluß fließende Wasser weitgehend frei ist von festen Partikeln. Durch die erfindungsgemäßen Maßnahmen sind zusätzliche Filtermaßnahmen, wie Sieb, Filtersack, entbehrlich.

Die erfindungsgemäße Absaugeinrichtung ist bei minimalem Leitungsbedarf raumsparend unterzubringen. Bei Unterbringung in einem Gerät, welches oberhalb des Fußbodens plazierbar ist, kann der Abscheidebehälter vorteilhafterweise durch eine Öffnung im Boden eines Gerätes, in dem die Absaugeinrichtung angeordnet ist, hindurchragen; er ist dadurch relativ leicht entleer bzw. austauschbar. Die Anordnung des Abscheidebehälters unmittelbar unterhalb des Separierbehälters hat den Vorzug, daß das Wasser alleine unter dem Einfluß der Schwerkraft in den Abscheidebehälter laufen kann. Dies ist im Hinblick auf jene Absaugeinrichtungen von Bedeutung, die keine Hilfspumpe oder dergleichen haben, welche das Abwasser in das Abwassernetz drückt. Ein weitere wesentlicher Vorteil ist, daß nicht nur die über die Saugdüse, sondern auch die über die Spülund/oder Speieinrichtung in des Abflußsystem gelangenden Teilchen aufgefangen werden können. Konstruktiv bildet das Aufnahmeteil für den Abscheidebehälter vorteilhafterweise mit dem Separierbehälter eine Baueinheit, wobei vorzugsweise am Gehäuse des Separierbehälters das Aufnahmeteil sowie Stutzen für den Anschluß der Abflußleitung einerseits und der Abflußleitung der Spül- und/oder Speieinrichtung angeformt sind.

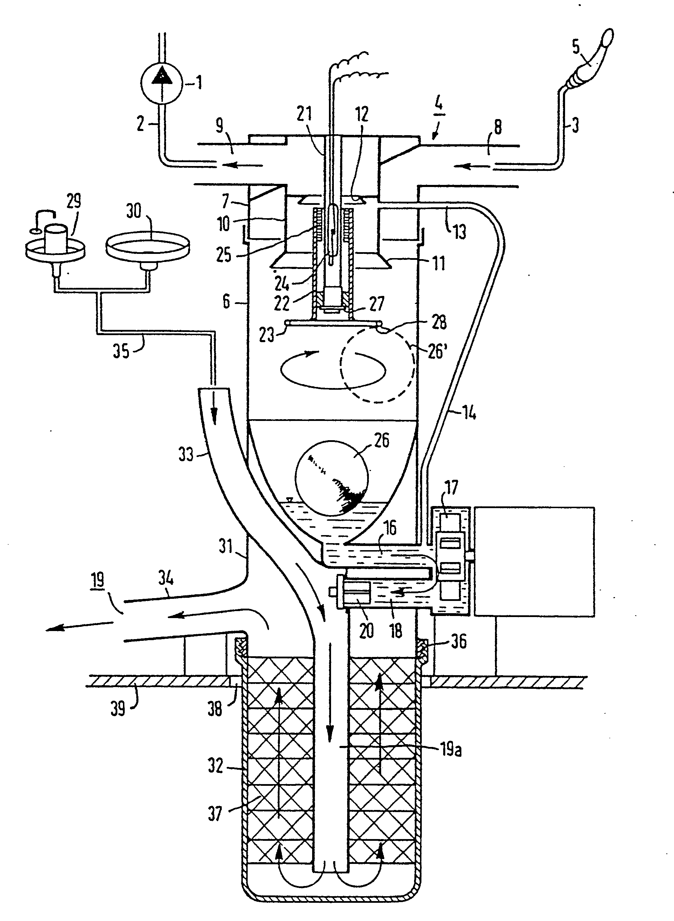

Ein Ausführungsbeispiel der Erfindung wird nachfolgend anhand der Zeichnung näher erläutert:

Die Figur zeigt in einer Prinzipdarstellung eine zahnärztliche Absaugeinrichtung mit einer Saugpumpe 1, an der saugseitig eine aus zwei Abschnitten 2, 3 bestehende Saugleitung angeschlossen ist, zwischen denen ein Separierbehälter 5 geschaltet ist, in dem die von einer Saugdüse 5 beispielsweise aus einem Patientenmund abgesaugten flüssigen und festen Teilchen von der Saugluft separiert werden. Bei dem Separierbehälter 4 handelt es sich um einen an sich bekannten Zyklon-Abscheider mit einem zylindrischen, nach unten hin konisch sich verjüngenden unteren Behälterteil 6 und einem abnehmbar darauf gehalterten oberen Behälterteil 7. Der obere Behälterteil 7 weist einen tangential einmündenden Einlaßkanal 8 auf und einen etwa in gleicher Höhe ausmündenden Auslaßkanal 9, der mit dem Saugleitungsabschnitt 2 verbunden ist. Das obere Behälterteil 7 enthält einen zentrisch angeordneten, nach unten gerichteten Stutzen 10 mit einer Umlenkkante 11 und einer Staudruckblende 12. In Strömungsrichtung gesehen unmittelbar vor der Staudruckblende 12 mündet ein Anschluß 13 einer By-paßleitung 14. Der andere Anschluß der Bypaßleitung 14 mündet in einen Abflußkanal 16, der gleichsam der saugseitige Kanal einer Kreiselpumpe 17 ist, deren druckseitiger Leitungskanal 18 in eine Abflußleitung 19 mündet. Im druckseitigen Leitungskanal 18 ist ferner noch ein Rückschlagventil 20 angeordnet, mit dem ein Rücksaugen von abgeflossener Flüssigkeit aus der Abflußleitung 19 verhindert wird. Dies ist erforderlich, weil die Pumpe 17 erst dann abdichtet und ihre Pumpwirkung entfaltet, wenn die Pumpe mit Flüssigkeit gefüllt ist.

Im oberen Behälterteil 7 ist konzentrisch zum Stutzen 10 ein Rohr 21 angeordnet, über das teleskopartig ein zweites Rohr 22 gestülpt ist, an dessen unterem stirnseitigen Ende ein Ring 23 befestigt ist. Rohr 22 und Ring 23 dienen als Betätigungselement für ein Schaltelement 24 (Reed-Kontakt), mit dem z.B. die Saugpumpe 1 oder ein in der Saugleitung 2 angeordnetes Absperrventil ein- und ausgeschaltet werden können. Zu diesem Zweck enthält das konzentrische, zum Rohr 21 beweglich geführte Rohr 22 am oberen Ende einen ringförmig ausgebildeten, mit dem Schaltelement 24 zusammenwirkenden Permanentmagneten 25.

Mit 26 ist ein kugelförmiger Schwimm- und Schwebekörper bezeichnet, der im etwa kegelstumpfförmig auslaufenden und eiförmig ausgebauchten unteren Behälterteil 6 auf der angesammelten Flüssigkeit schwimmend aufliegt und bei geringem Flüssigkeitsstand oder bei leerem Behälter von der durchströmenden Luft mitgerissen wird und dann kreiselnd um die Behälterinnenwand rotiert. Die eiförmige Ausbildung des unteren Behälterteiles hat sich hierzu in Verbindung mit dem kugelförmigen Schwimm- und Schwebekörper als besonders vorteilhaft erwiesen. Bei steigendem Flüssigkeitspegel liegt die Kugel 26 schwimmend auf der Flüssigkeit auf, wobei sie sich durch die Verwirbelung der Luft ständig in Eigenrotation befindet und auch an der Behälterwand entlang rotiert.

Das Betätigungsgelement 22, 23 befindet sich bei steigendem Saugbetrieb zunächst in der gezeigten Stellung, die durch einen Anschlag 27 begrenzt ist. Der Permanentmagnet 25 befindet sich in Höhe des Schaltelementes 24. Der Schaltkontakt ist in dieser Position geschlossen, der Saugmotor 1 oder ein in der Saugleitung 2 angeordnetes Ventil aktiviert. Bei einem bestimmten Füllstand kommt die Kugel 26 an der Unterseite 28 des Ringes 23 zur Anlage (siehe gestrichelte Position 26'). Aufgrund der Größe des Ringes 23 wird verhindert, daß die Kugel 26 in den oberen Behälterteil 7 gelangen kann. Mit weiter ansteigendem Pegel wird das Rohr 22 angehoben, wodurch der Permanentmagnet 25 längs des Führungsrohres 21 verstellt wird. Nach einer gewissen Weglänge öffnet der Schaltkontakt, wodurch der Saugmotor 1 abgeschaltet oder das in der Saugleitung 2 angeordnete Ventil abgesperrt wird. Während dieser Absperr-Abschaltphase ist die Kreiselpumpe 17 in Betrieb, wodurch die im Behälter angesammelte Flüssigkeit sehr rasch in den Abflußkanal 19 gedrückt wird.

Die Kugel 26 wird infolge der Luftströmung bei vorhandener Flüssigkeit ständig gedreht, wodurch vermieden wird, daß an der Kugel Feststoffteilchen haften bleiben können. Bei leerem Behälter rotiert die Kugel infolge der tangential eingeblasenen Saugluft mit hoher Geschwindigkeit entlang der Behälterinnenwand, wodurch ein gewisser Reinigungseffekt sowohl beim Behälter als auch bei der Kugel erzielt wird.

Anstelle einer einzigen Kugel können auch mehrere Kugeln vorgesehen werden. Auch hinsichtlich der Gestaltung des bzw. der Schwimm- und Schwebekörper sind Modifikationen denkbar; jedoch hat sich die Kugelform als besonders vorteilhaft erwiesen. Modifikationen sind auch bezüglich des Ringes 23 denkbar; so kann eine gegebenenfalls mit Durchbrechungen versehene ebene Platte vorgesehen werden, die in ihren Abmessungen so dimensioniert ist, daß die Kugel 26 bei steigendem Flüssigkeitspegel nicht in den oberen Behälterteil 7 eintreten kann; die im wesentlichen ebene Anlagefläche der Platte hat den Vorteil, daß die Kugel selbst im angedrückten Zustand an der Fläche abrollen kann, wodurch der besagte Reinigungseffekt auch bei anliegender Kugel gegeben ist

Um die über die Saugdüse abgesaugten und auch die über die schematisiert eingezeichneten Spül- und Speieinrichtungen 29, 30 in das Abwassernetz gelangenden festen Teilchen, wie Gold, Amalgam, abfangen zu können, ist unmittelbar unterhalb des Separierbehälters 4 ein rohrförmig ausmündendes Aufnahmeteil 31 angeordnet, an dem mittels eines Schraubgewindes od.dgl. ein Abscheidebehälter 32 abnehmbar gehalten ist. Das Aufnahmeteil 31 bildet mit dem Gehäuse des Separierbehälters 4 eine Baueinheit mit angeformten Anschlußstutzen 33, 34 für einerseits die Abflußleitung 35 aus den Spül- und Speieinrichtungen 29, 30 und andererseits für die in das Abwassersystem führende Abflußleitung 19. Der Abflußleitungskanal 18 aus dem Separierbehälter 4 und der Stutzen 33 der Abwasserleitung 35 münden zentrisch der gesamten Anordnung in einen Abflußleitungsabschnitt 19a ein, der bis etwa in Bodennähe des Abscheidebehälters 32 eintaucht. Das Abwasser aus dem Separierbehälter 4 und den Spül- und Speieinrichtungen 29, 30 wird also zentrisch bis in Bodennähe des Behälters eingeleitet; das gegenüber den festen Teilchen leichtere Abwasser steigt nach oben und gelangt über den oberhalb des Behälterrandes 36 angeordneten Abflußstutzen 34 in die Abflußleitung 19. Der Abscheidebehälter 32 dient hier also gleichsam als Syphon.

Um den Auffangwirkungsgrad zu verbessern kann im Abscheidebehälter 32 noch ein Filter 37 angeordnet sein. Dieser Filter kann entweder so beschaffen sein, daß er für Flüssigkeit durchlässig ist, dagegen feste Teilchen zurückhält oder daß er den Fluß des Abwassers im Abscheidebehälter beruhigt, so daß feste Teilchen am Boden des Abscheidebehälters absinken können und nicht mit dem abfließenden Wasser in das Abwassernetz gelangen können.

Der Einbau der aus Separierbehälter 4 mit integriertem Aufnahmeteil 31 für den Abscheidebehälter 32 bestehenden Baueinheit erfolgt vorteilhafterweise senkrecht, bei einem Gerät, welches oberhalb des Fußbodens plazierbar ist, zweckmäßigerweise so, wie in der Figur dargestellt. Der Abscheidebehälter 32 steht durch eine Öffnung 38 im Geräteboden 39 nach unten vor, wodurch ein Entleeren bzw. Austausch des Behälters besonders leicht ist.

**Patentansprüche**

1. Zahnärztliche Absaugeinrichtung mit einer Saugpumpe (1), an der eine Saugleitung (2, 3) mit einer Saugdüse (5) zum Absaugen von flüssigen und festen Teilchen angeschlossen ist, unter Zwischenschaltung eines als Zyklon-Abscheider ausgebildeten Separierbehälters (4), in welchem die abgesaugten Teilchen von der Saugluft getrennt werden und welcher einen in eine Abflußleitung (19) mündenden Abflußkanal (16) aufweist, dadurch gekennzeichnet, daß im Anschluß an den Separierbehälter (4) unmittelbar unterhalb desselben ein Abscheidebehälter (32) für die festen Teilchen abnehmbar und auswechselbar gehaltert ist, in welchem ein die einströmende Flüssigkeit beruhigendes und feste Teilchen zurückhaltendes Einsatzfilterteil (37) angeordnet ist, durch den hindurch bis in Bodennähe des Behälters (32) reichend ein zentrisch angeordneter und einerseits mit dem Abflußkanal (16) des Separierbehälters (4) und andererseits mit einer Spül- und/oder Speieinrichtung (29, 30) in Verbindung stehender Leitungsabschnitt (19a) der Abflußlei-tung eintaucht, und daß der weiterführende Anschluß(34) der Abflußleitung (19) oberhalb des Behälterrandes (36) angeordnet ist.

2. Zahnärztliche Absaugeinrichtung nach Anspruch 1, dadurch gekennzeichnet, daß Separierbehälter (4) und ein den Abscheidebehälter(32) halterndes Aufnahmeteil (31) eine Baueinheit bilden, die in einem oberhalb des Fußbodens plazierbaren Gerät senkrecht eingebaut ist, wobei der Abscheidebehälter (32) durch eine Öffnung (38) im Geräteboden (39) nach unten vorsteht.

**Claims**

1. A dental aspiration device having a suction pump (1), to which a suction tube (2, 3) with a suction nozzle (5) for sucking-off liquid and solid particles is connected, with the interposition of a separating container (4) which is in the form of a cyclone separator and in which the sucked-off particles are separated from the suction air and which has a discharge channel (16) which opens into a discharge pipe (19), characterised in that, a separating container (32) for the solid particles is detachably and axchangeably secured after and directly below tha separating container (4), in which separating container (32) an inserted filter component (37) is arranged, which stabilizes the inflowing liquid and retains solid particles and through which plungas a centrally arranged pipe section (19a) of the discharge pipe which extends to the vicinity of the base of the container (32) and is connected to the discharge channel (16) of the separating container (4), on the one hand, and to a rinsing and/or spitting device (29, 30), on the other hand; and that the onward lead (34) of the discharge pipe (19) is arranged above the edge (36) of the container.

2. A dental aspiration device as claimed in Claim 1, characterised in that the separating container (4) and a reception member (31) which holds the separating containar (32), form one unit which is vertically installed in an apparatus which can be mounted above the floor; the separating container (32) protruding downwardly through an opening (38) in the base (39) of the apparatus.

## Revendications

1. Dispositif d'aspiration dentaire comportant une pompe aspirante (1), à laquelle est raccordée une canalisation d'aspiration (2, 3) comportant une buse d'aspiration (5) servant à aspirer des particules liquides et solides, avec le montage intercalé d'un récipient de séparation (4) réalisé sous la forme d'un séparateur à cyclone et dans lequel les particules aspirées sont séparées de l'air d'aspiration et qui comporte un canal d'évacuation (16) débouchant dans une canalisation d'évacuation (19), caractérisé par le fait qu'en aval du récipient de séparation (4) et directement au-dessous de ce dernier se trouve monté, d'une manière amovible et interchangeable, un récipient (32) de collecte des particules solides, dans lequel est installée une cartouche de filtre (37) calmant le liquide pénétrant et retenant les particules solides et à travers laquelle un élément centré (19a) de la canalisation d'évacuation, qui est relié d'une part au canal d'évacuation (16) du récipient de séparation (4) et d'autre part à un dispositif de lavage et/ou un dispositif formant crachoir (29, 30), pénètre jusqu'à proximité du fond du récipient (32), et que le raccord aval (34) de la canalisation d'évacuation (19) est disposé au-dessus du bord (36) du récipient.

2.- Dispositif d'aspiration dentaire suivant la revendication 1, caractérisé par le fait que le récipient de séparation (4) et une partie formant logement (31) supportant le récipient de collecte (32) forment une unité modulaire qui est insérée verticalement dans un appareil pouvant être monté au-dessus du sol, le récipient de collecte (32) faisant saillie vers le bas à travers une ouverture (38) ménagée dans la base (39) de l'appareil.